# EUROPÄISCHE PATENTSCHRIFT

(11) **EP 0 402 835 B1**
(45) Veröffentlichungstag und Bekanntmachung des Hinweises auf die Patenterteilung: **08.12.1993**
(21) Anmeldenummer: 90111014.8
(22) Anmeldetag: 11.06.1990
(51) Int. Cl.: F16D 55/226, F16D 65/84, F16D 65/16

(54) **Teilbelag-Scheibenbremse mit Schwimmsattel und Druckplatte**
Spot-type disc brake with floating caliper and pressure plate
Frein à disque à garniture partielle à étrier flottant et à plateau de pression

(30) Priorität: 12.06.1989 DE 3919179
(43) Veröffentlichungstag der Anmeldung: 19.12.1990
(73) Patentinhaber: LUCAS INDUSTRIES public limited company, Birmingham, B19 2XF West Midlands (GB)
(72) Erfinder: Gockel, Harald, D-5413 Bendorf (DE); Röhling, Bernd, D-5470 Andernach (DE)
(74) Vertreter: Goetz, Rupert, Dipl.-Ing.

(56) Entgegenhaltungen:
- EP-A- 0 248 385
- EP-A- 0 289 399
- DE-A- 2 722 194
- DE-A- 3 147 933
- DE-A- 3 604 613
- DE-A- 3 742 237
- DE-B- 1 130 310

## Beschreibung

Die Erfindung betrifft eine Teilbelag-Scheibenbremse mit
- einem Bremsträger, an dem ein Paar Sattelführungen angeordnet ist, die durch elastische Manschetten gegen Verschmutzung geschützt sind,
- einem Paar Bremsbacken, die auf je einer Seite einer Bremsscheibe angeordnet sind und je eine Trägerplatte und einen daran befestigten Bremsbelag aufweisen,
- einem Schwimmsattel, der auf den Sattelführungen parallel zur Achse der Bremsscheibe geführt ist und die Bremsscheibe sowie die beiden Bremsbacken übergreift,
- einem Stößel zum Betätigen der Bremse, der auf einer Seite der Bremsscheibe im Schwimmsattel axial verschiebbar geführt ist, und
- einer Druckplatte, die parallel zur Bremsscheibe zwischen dem Stößel und der Trägerplatte der benachbarten Bremsbacke angeordnet ist, um Betätigungskräfte des Stößels auf diese Bremsbacke zu verteilen, und die im Bereich der Sattelführungen je eine Randaussparung für die zugehörige elastische Manschette aufweist.

Eine solche Teilbelag-Scheibenbremse ist aus der EP-A-0248385 bekannt. Die Druckplatte hat im wesentlichen, abgesehen von ihren Randaussparungen für die elastischen Manschetten der Sattelführungen, die gleiche Flächenausdehnung wie die Bremsbacke, an der sie anliegt. Der Stößel, der zum Betätigen der Bremse gegen die Druckplatte drückt, hat eine im Vergleich zu deren Fläche kleine Stirnfläche. Damit die Druckplatte sich bei kräftigem Betätigen der Bremse nicht verbiegt, hat sie eine erhebliche Dicke, die größer ist als die Gesamtdicke der zugehörigen Bremsbacke im neuen Zustand ihres Bremsbelags. Die Druckplatte bildet somit einen mechanisch und auch thermisch hochbelastbaren Schutzschild zwischen der von ihr betätigbaren Bremsbacke und dem Stößel sowie weiteren Bestandteilen der Bremsbetätigungsvorrichtung. Obwohl die elastischen Manschetten der Sattelführungen innerhalb des Sattels und teilweise innerhalb der Randaussparungen der Druckplatte verhältnismäßig geschützt angeordnet sind, hat sich ihre Lebensdauer als nicht ganz befriedigend erwiesen, wenn die Bremse bei häufigen längeren Bremsungen besonders hoch beansprucht worden ist.

Der Erfindung liegt deshalb die Aufgabe zugrunde, eine Teilbelag-Scheibenbremse der genannten Gattung derart weiterzubilden, daß die elastischen Manschetten und somit auch die Sattelführungen, die sie zu schützen haben, auch bei ungünstigen Bedingungen eine noch höhere Lebensdauer erreichen.

Die Aufgabe ist erfindungsgemäß bei einer Scheibenbremse der genannten Gattung dadurch gelöst, daß
- die elastischen Manschetten durch steife topfförmige Kappen abgedeckt sind, die an je einer Büchse der zugehörigen Sattelführung befestigt sind und in je eine der Randaussparungen der Druckplatte mit radialem Spiel eingreifen, und
- zwischen der Druckplatte und der Trägerplatte der benachbarten Bremsbacke eine Wärmedämmplatte angeordnet ist, welche die Randaussparungen der Druckplatte mindestens teilweise überdeckt.

Die Erfindung beruht auf der Erkenntnis, daß die Druckplatte über Wandflächen, die ihre Randaussparungen begrenzen, unerwartet viel Wärme radial nach außen abstrahlen kann. Infolgedessen kann es vorkommen, daß die elastischen Manschetten nach einer Bremsung thermisch stärker belastet werden als während einer Bremsung. Dies beruht darauf, daß die Druckplatte wegen ihrer hohen Wärmekapazität die an ihr anliegende Bremsbacke während einer Bremsbetätigung daran hindern kann, sich zu überhitzen und infolgedessen auch erhebliche Wärmemengen in Richtung zu den benachbarten Stirnseiten der elastischen Manschetten abzustrahlen. Dabei kann die Druckplatte jedoch selber eine verhältnismäßig hohe Temperatur erreichen, die nach dem Bremsen unter ungünstigen Bedingungen, besonders bei Stillstand des zugehörigen Fahrzeugs, nur sehr langsam abgebaut wird, und dies zu einem erheblichen Teil dadurch, daß die Druckplatte Wärme radial abstrahlt, wodurch die elastischen Manschetten überhitzt werden können. Infolgedessen können die in den Randaussparungen angeordneten Sektoren der elastischen Manschetten verspröden und schließlich undicht werden, so daß letzten Endes auch die Sattelführungen selbst geschädigt werden können.

Erfindungsgemäß wird dies durch zwei einander ergänzende Maßnahmen vermieden. Zum einen werden die elastischen Manschetten durch die steifen topfförmigen Kappen nicht nur gegen die benachbarte Bremsbacke, sondern vor allem auch gegen die Druckplatte abgeschirmt, so daß die elastischen Manschetten an jeglicher Berührung der Druckplatte gehindert und vor Wärmeeinwirkungen von der Druckplatte her besser als bisher geschützt sind. Zum zweiten wird die Druckplatte die als solche nicht hitzeempfindlich ist, durch die zwischen ihr und der benachbarten Bremsbacke angeordnete Wärmedämmplatte daran gehindert, in der bisher üblichen und auch erwünschten Weise als Wärmespeicher genutzt zu werden. Die Druckplatte bleibt infolgedessen kühler und kann somit entsprechend weniger Wärme radial in Richtung zu den elastischen Manschetten abstrahlen.

Bei einer bevorzugten Ausführungsform der Erfindung besteht die Wärmedämmplatte aus einem Duroplast. Besonders zweckmäßig ist es, wenn die Wärmedämmplatte mit einem eingebetten faserförmigen Werkstoff verstärkt ist.

Bei Teilbelag-Scheibenbremsen mit Schwimmsattel ist es an sich bekannt, beispielsweise aus der DE-A-3742237 A1, zwischen dem Kolben einer hydraulischen Betätigungseinrichtung und der benachbarten Bremsbacke eine aus wärmedämmendem Material bestehende Zwischenplatte anzuordnen, die entweder an der Stirnfläche des Kolbens oder an der ihr zugewandten Rückenfläche einer Belagträgerplatte befestigt oder auch selbst als Trägerplatte ausgebildet sein kann. Damit wird angestrebt, die thermische Belastung der Bremsflüssigkeit zu vermindern; Sattelführungen sind von dieser Maßnahme nicht betroffen.

Ein Ausführungsbeispiel der Erfindung wird im folgenden anhand schematischer Zeichnungen mit weiteren Einzelheiten erläutert. Es zeigen:

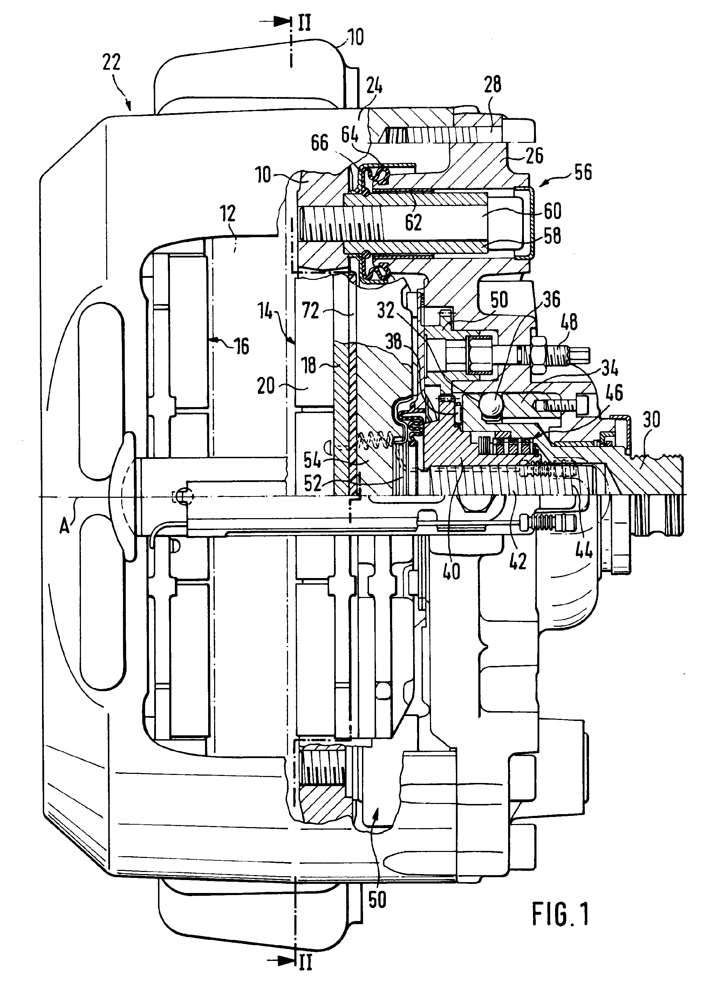

- Fig. 1: die Draufsicht einer erfindungsgemäßen Scheibenbremse, teilweise als Schnitt I-I in Fig. 2 gezeichnet, und
- Fig. 2: den Schnitt II-II in Fig. 1.

Zu der dargestellten Scheibenbremse gehört ein Bremsträger 10, der über eine Bremsscheibe 12 hinweggreift und zwei Bremsbacken 14 und 16 führt, die an je eine Seite der Bremsscheibe 12 anlegbar sind. Die Bremsbacken 14 und 16 haben je eine Trägerplatte 18 und einen daran befestigten Bremsbelag 20. Über die Bremsscheibe 12 und die Bremsbacken 14 und 16 greift ein Schwimmsattel 22 hinweg, der ein Brückenteil 24 und ein Gehäuseteil 26 aufweist, diese beiden Teile des Schwimmsattels 22 sind mit Schrauben 28 fest zusammengespannt. Das Brückenteil 24 enthält eine mechanische Betätigungsvorrichtung üblicher Bauart mit einer glockenförmigen Welle 30, an der eine erste wendelförmige Kurve 32 ausgebildet ist, einer im Gehäuseteil 26 befestigten zweiten wendelförmigen Kurve 34 und Wälzkörpern 36, die zwischen den beiden Kurven 32 und 34 angeordnet sind und dafür sorgen, daß die Welle 30, wenn sie in einer bestimmten Drehrichtung gedreht wird, zugleich in Richtung ihrer Achse A zur Bremsscheibe 12 hin verschoben wird.

Die Welle 30 stützt sich mit ihrer von der Kurve 32 abgewandten inneren Stirnfläche über ein Nadellager 38 an einem Spreizkörper 40 ab, in den ein Stößel 42 mit einem selbsthemmenden Gewinde 44 eingeschraubt ist. Die Welle 30 ist mit dem Spreizkörper 40 außerdem durch eine selbsttätige Nachstellvorrichtung 46 verbunden, die von bekannter Bauart und deshalb nicht erläuterungsbedürftig ist. Parallel zur Welle 30 ist im Gehäuseteil 26 eine weitere Welle 48 gelagert, die ein Ritzel 50 trägt, welches mit dem Spreizkörper 40 in Zahneingriff steht, um ihn nach Abnutzung der Bremsbeläge 20, vor dem Einbau neuer Bremsbacken 14 und 16, in seine Ausgangsstellung rückzustellen.

Der Stößel 42 hat ein kolbenartiges Kopfstück 52, von dem Betätigungskräfte über eine Druckplatte 54 auf die Bremsbacke 14 übertragen werden. Die Druckplatte 54 hat im wesentlichen den gleichen Umriß wie die Trägerplatte 18 des Bremsbelags 20, ist jedoch erheblich dicker und somit biegesteifer; infolgedessen ist die Druckplatte 54 imstande, vom Stößel 42 zentral aufgebrachte Druckkräfte im wesentlichen gleichmäßig auf die Bremsbacke 14 zu übertragen.

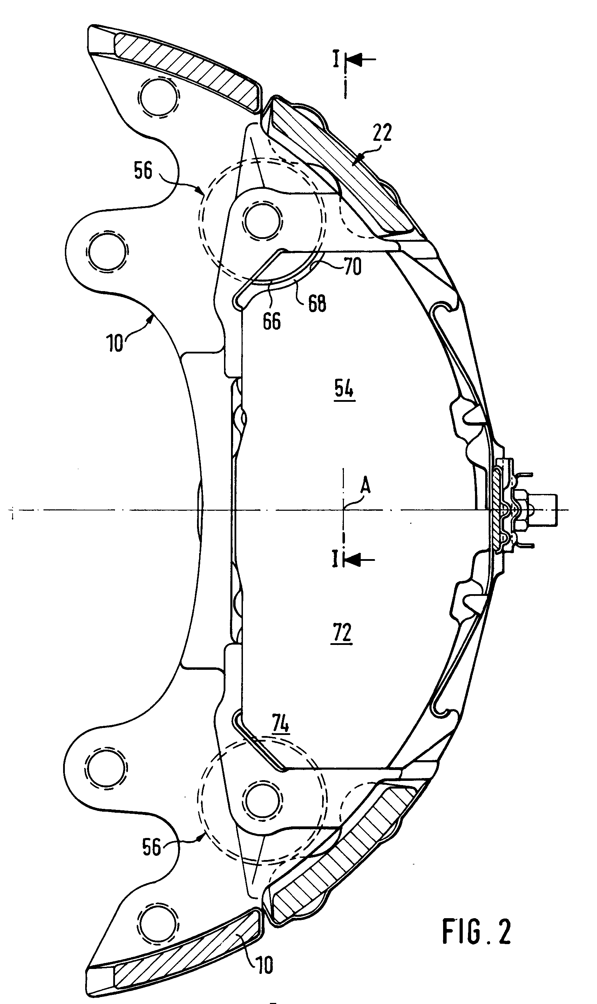

Zum Betätigen der anderen Bremsbacke 16 ist der Schwimmsattel 22 in Richtung der Achse A mittels eines Paars Sattelführungen 56 in bezug auf den Bremsträger 10 verschiebbar. Die Sattelführungen 56 haben je eine Büchse 58, die mittels einer Schraube 60 am Bremsträger 10 befestigt und in einem Gleitlager 62 im Gehäuseteil 26 des Schwimmsattels 22 geführt ist. Die Sattelführungen 56 sind durch je eine elastische Manschette 64 aus Silikongummi abgedichtet, die mit einem ihrer Enden am Gehäuseteil 26, und mit dem anderen Ende an der Büchse 58 befestigt sind. Jede dieser elastischen Manschetten 64 ist von einer steifen, topfförmigen Schutzkappe 66 aus einem Thermoplast umschlossen, die nahe dem am Bremsträger 10 befestigten Ende der zugehörigen Büchse 58 befestigt ist und in einem zur Achse A normalen Schnitt gemäß Fig. 2 kreisförmig ist.

Die Druckplatte 54 hat an ihren beiden Eckbereichen, die je einer der Sattelführungen 56 benachbart sind, je eine Randaussparung 68, die durch eine mit der zugehörigen Sattelführung 56 gleichachsige, kreisbogenförmige Wandfläche 70 begrenzt ist. Zwischen jeder dieser Wandflächen 70 und der Außenwand der Schutzkappe 66 besteht ausreichendes Spiel, so daß beide einander nicht berühren können.

Zwischen der Druckplatte 54 und der Trägerplatte 18 der benachbarten Bremsbacke 14 ist eine Wärmedämmplatte 72 aus einem Duroplast mit Fasereinlagen angeordnet. Als Fasereinlagen sind Glasfasern sowie ein Netzgitter aus Kunststoffaser vorgesehen. Die Wärmedämmplatte 72 hat einen Umriß, der mit demjenigen der Trägerplatte 18 übereinstimmt, so daß die Druckplatte 54 mit ihrer gesamten Stirnfläche über die Wärmedämmplatte 72 Bremsbetätigungskräfte auf die Bremsbacke 14 übertragen kann. Die Randaussparungen 68 der Druckplatte 54 sind durch je einen Eckbereich 74 der Wärmedämmplatte 72 abgedeckt, so daß die beiden Schutzkappen 66 und die von ihnen umschlossenen elastischen Manschetten 64 gegen unmittelbare Wärmeabstrahlung von der Trägerplatte 18 geschützt sind. Der Wärmeübergang von der Trägerplatte 18 zur Druckplatte 54 ist durch die Wärmedämmplatte 72 derart vermindert, daß auch von den Wandbereichen 70 der Druckplatte 54 keine Wärmestrahlung von solcher Stärke ausgehen kann, daß die Schutzkappen 66 und/oder elastischen Manschetten 64 dadurch geschädigt werden könnten.

## Patentansprüche

1. Teilbelag-Scheibenbremse mit
- einem Bremsträger (10), an dem ein Paar Sattelführungen (56) angeordnet ist, die durch elastische Manschetten (64) gegen Verschmutzung geschützt sind,
- einem Paar Bremsbacken (14, 16), die auf je einer Seite einer Bremsscheibe (12) angeordnet sind und je eine Trägerplatte (18) und einen daran befestigten Bremsbelag (20) aufweisen,
- einem Schwimmsattel (22), der auf den Sattelführungen (56) parallel zur Achse der Bremsscheibe (12) geführt ist und die Bremsscheibe (12) sowie die beiden Bremsbacken (14, 16) übergreift,
- einem Stößel (42) zum Betätigen der Bremse, der auf einer Seite der Bremsscheibe (12) im Schwimmsattel (22) axial verschiebbar geführt ist, und
- einer Druckplatte (54), die parallel zur Bremsscheibe (12) zwischen dem Stößel (42) und der Trägerplatte (18) der benachbarten Bremsbacke (14) angeordnet ist, um Betätigungskräfte des Stößels (42) auf diese Bremsbacke (14) zu verteilen, und die im Bereich der Sattelführungen (56) je eine Randaussparung (68) für die zugehörige elastische Manschette (64) aufweist,
dadurch **gekennzeichnet,** daß
- die elastischen Manschetten (64) durch steife topfförmige Kappen (66) abgedeckt sind, die an je einer Büchse (58) der zugehörigen Sattelführung (56) befestigt sind und in je eine der Randaussparungen (68) der Druckplatte (54) mit radialem Spiel eingreifen, und
- zwischen der Druckplatte (54) und der Trägerplatte (18) der benachbarten Bremsbacke (14) eine Wärmedämmplatte (72) angeordnet ist, welche die Randaussparungen (68) der Druckplatte (54) mindestens teilweise überdeckt.

2. Teilbelag-Scheibenbremse nach Anspruch 1,
dadurch **gekennzeichnet,** daß die Wärmedämmplatte (72) aus einem Duroplast besteht.

3. Teilbelag-Scheibenbremse nach Anspruch 2,
dadurch **gekennzeichnet,** daß die Wärmedämmplatte (72) mit einem eingebetteten faserförmigen Werkstoff verstärkt ist.

## Claims

1. A spot-type disc brake, comprising
- a brake carrier (10) with a pair of caliper guide means (56) arranged at the same and protected from contamination by elastic boots (64),
- a pair of brake pads (14, 16) disposed at either side of a brake disc (12) and each including a backplate (18) with a friction lining (20) secured to the same,
- a floating caliper (22) guided in parallel with the axis of the brake disc (12) on the caliper guide means (56) and straddling the brake disc (12) as well as both brake pads (14, 16),
- a brake actuating tappet (42) guided for axial displacement in the floating caliper (22) at one side of the brake disc (12), and
- a pressure plate (54) arranged in parallel with the brake disc (12) between the tappet (42) and the backplate (18) of the adjacent brake pad (14), to distribute actuating forces of the tappet (42) to this brake pad (14), and having a recess (68) each in its edge in the area of the caliper guide means (56) to receive the corresponding elastic boot (64),
**characterized** in that
- the elastic boots (64) are covered by stiff, cup-shaped caps (66) fixed to a sleeve (58) each of the corresponding caliper guide means (56) and engaging with radial clearance in one each of the recesses (68) formed in the edge of the pressure plate (54), and
- a heat insulation plate (72) is disposed between the pressure plate (54) and the backplate (58) of the adjacent brake pad (14) and at least partly covers the recesses (68) in the edge of the pressure plate (54).

2. The spot-type disc brake as claimed in claim 1,
characterized in that the heat insulation plate (72) is made of a thermoset material.

3. The spot-type disc brake as claimed in claim 2,
characterized in that the heat insulation plate (72) is reinforced by fibrous material embedded therein.

## Revendications

1. Frein à disque à garniture partielle comportant :
- un support de frein (10), sur lequel est disposé un couple de guidages d'étrier (56), protégés contre les souillures au moyen de manchettes (64) élastiques,
- un couple de mâchoires de frein (14, 16), disposées chacune d'un côté d'un disque de frein (12) et présentant chacune une plaque support (18) et une garniture de frein (20) fixée dessus,
- un étrier flottant (22), guidé sur les guidages d'étrier (56), parallèlement à l'axe du disque de frein (12) et entourant le disque de frein (12), ainsi que les deux mâchoires de freinage (14, 16)
- un poussoir (42) destiné à l'actionnement du frein, guidé de façon à pouvoir être déplacé axialement d'un côté du disque de frein (12) dans l'étrier flottant (22), et
- un plateau de pression (54) disposé parallèlement au disque de frein (12), entre le poussoir (42) et la plaque support (18) de la mâchoire de frein (14) voisine, afin de répartir les efforts d'actionnement du poussoir (42) sur cette mâchoire de frein (14), et présentant, dans la zone de chaque guidage d'étrier (56), un évidement marginal (68) destiné à une manchette (64) élastique afférente,
caractérisé en ce que
- les manchettes élastiques (64) sont recouvertes au moyen de capuchons (64) en forme de pot, rigides, fixés chacun sur une douille (58) du guidage d'étrier (56) afférent et s'engageant chacun, avec un jeu radial, dans l'un des évidements marginaux (68) du plateau de pression (54), et
- entre le plateau de pression (54) et la plaque support (18) de la mâchoire de freinage (14) voisine est disposée une plaque d'isolation thermique (72), recouvrant au moins partiellement les évidements marginaux (68) du plateau de pression (54).

2. Frein à disque à garniture partielle selon la revendication 1, caractérisé en ce que la plaque d'isolation thermique (72) est réalisée en une matière thermodurcissable.

3. Frein à disque à garniture partielle selon la revendication 2, caractérisé en ce que la plaque d'isolation thermique (72) est renforcée avec un matériau fibreux noyé dedans.
